# EUROPÄISCHE PATENTSCHRIFT

(11) **EP 2 644 346 B1**
(45) Veröffentlichungstag und Bekanntmachung des Hinweises auf die Patenterteilung: **14.06.2017**
(21) Anmeldenummer: 13000284.3
(22) Anmeldetag: 21.01.2013
(51) Int. Cl.: B29B 15/10, B29C 70/46, B29K 105/08

(54) **Verfahren zur Herstellung eines flächigen Prepreg-Materialzuschnitts**
Method for producing a flat prepreg material blank
Procédé de fabrication d'une section de matériau de feuille préimprégnée plate

(30) Priorität: 27.03.2012 DE 102012006032
(43) Veröffentlichungstag der Anmeldung: 02.10.2013
(73) Patentinhaber: MBB Fertigungstechnik GmbH, 48361 Beelen (DE)
(72) Erfinder: Bühlmeyer, Robert, 33442 Herzebrock-Clarholz (DE); Ringelmann, Manfred, 48336 Sassenberg (DE); Düker, Martin, 33335 Gütersloh (DE)
(74) Vertreter: Bittner, Thomas L.

(56) Entgegenhaltungen:
- DE-A1- 2 528 356
- JP-A- 2008 280 470
- CAMPBELL F C ED - CAMPBELL FLAKE C: "Manufacturing processes for advanced composites, Ply Collation: A Major Cost Driver", 1. Januar 2004 (2004-01-01), MANUFACTURING PROCESSES FOR ADVANCED COMPOSITES, ELSEVIER ADVANCED TECHNOLOGY, OXFORD, GB, PAGE(S) 131 - 173, XP002535222, ISBN: 978-1-85617-415-2 * Absatz [05.4] - Absatz [05.5] *

## Beschreibung

Die Erfindung betrifft ein Verfahren zur Herstellung eines flächigen Prepreg-Materialzuschnitts gemäß Anspruch 1, ein Verfahren zur Herstellung eines im Wesentlichen schalenförmigen faserverstärkten Kunststoffteils gemäß dem Oberbegriff von Anspruch 14 und eine Fertigungsanlage zur Durchführung eines vorschlagsgemäßen Verfahrens gemäß Anspruch 15.

Flächige Prepreg-Materialzuschnitte lassen sich grundsätzlich als Halbzeuge bei der umformenden Herstellung schalenförmiger faserverstärkter Kunststoffsteile verwenden. Solche faserverstärkte Kunststoffteile finden sich in zahlreichen technischen Anwendungsbereichen. Beispielhaft sei hier der Bereich der Strukturteile von Kraftfahrzeugen genannt. Schalenförmige faserverstärkte Kunststoffteile werden beispielsweise für Säulen, Träger, Crashelemente, Sitze o. dgl. benötigt.

Die Prepreg-Halbzeuge werden als Rollenware oder als Plattenware der jeweiligen Fertigungsanlage zugeführt, dort auf einen gewünschten Prepreg-Materialzuschnitt zugeschnitten und anschließend umgeformt und ausgehärtet.

Als Ausgangsmaterial für die obige Herstellung von faserverstärkten Kunststoffteilen dient üblicherweise ein Prepreg-Material, das in einem kontinuierlichen Verfahren hergestellt wird. Das bekannte Herstellungsverfahren (DE 25 28 356 A1), von dem die Erfindung ausgeht, basiert auf der kontinuierlichen Herstellung von Prepreg-Material, das nach dem Imprägnieren eines Fasermaterials auf einen Prepreg-Materialzuschnitt zugeschnitten wird. Nachteilig bei dem bekannten Verfahren ist die Tatsache, dass eine optimierte Auslegung im Hinblick auf einen spezifischen Anwendungsfall nur begrenzt möglich ist. Beispielsweise lässt sich ein lokal variierender Auftrag von Matrixharz mit dem bekannten Verfahren nicht realisieren. Angesichts dieser geringen Adaptierbarkeit auf nachgelagerte Prozesse bringt eine Integration der bekannten Prepreg-Herstellung in eine Fertigungsanlage für faserverstärkte Kunststoffteile auch keine Vorteile.

Entsprechend werden Prepreg-Halbzeuge heute in den Fertigungsanlagen für die Herstellung von faserverstärkten Kunststoffteilen von extern angeliefert und zunächst in aufwendigen Kühlanlagen gelagert, um ein vorzeitiges Reagieren des Matrixharzes zu vermeiden. Üblicherweise sind die Prepreg-Halbzeuge aus dem gleichen Grunde mit Schutzfolien belegt. Die gekühlte Lagerung ist kostenintensiv und eine automatisierte Handhabung ist insbesondere durch die Verwendung der Schutzfolie aufwendig.

Der Erfindung liegt das Problem zugrunde, das bekannte Verfahren zur Herstellung eines flächigen Prepreg-Materialzuschnitts so auszugestalten und weiterzubilden, dass eine optimale Parametrierung des Prepreg-Materialzuschnitts bei weitgehend automatisierter Fertigung möglich ist.

Das obige Problem wird bei einem Verfahren gemäß dem Oberbegriff von Anspruch 1 durch die Merkmale des kennzeichnenden Teils von Anspruch 1 gelöst.

Wesentlich ist zunächst, dass das noch nicht imprägnierte Fasermaterial zunächst an einer Zuschnittstation auf die Geometrie des jeweils herzustellenden Prepreg-Materialzuschnitts zugeschnitten wird. Je nach Anwendungsfall kann hier ein entsprechendes Aufmaß vorgesehen sein, das in einem späteren Besäumungsschritt entfernt wird.

Erst nach dem Zuschnitt des Fasermaterials wird der resultierende Faserzuschnitt in einer Imprägnierstation imprägniert. Interessant bei dieser Reihenfolge ist bereits die Tatsache, dass bei entsprechender Programmierbarkeit der Zuschnittstation eine weitgehend beliebige Faserausrichtung auf dem resultierenden Faserzuschnitt realisiert sein kann. Ferner ist es bei geeigneter Programmierbarkeit der Imprägnierstation ohne weiteres möglich, die Prozessparameter beim Imprägnieren je nach Oberflächenbereich des Faserzuschnitts zu optimieren.

Schließlich wird die resultierende Prepreg-Einzellage in einer Konfektionierstation mit mindestens einer weiteren, zuvor in der Imprägnierstation imprägnierten Prepreg-Einzellage zu einem mehrlagigen Prepreg-Materialzuschnitt gefügt. Interessant bei dem letztgenannten Verfahrensschritt ist die Tatsache, dass aus unterschiedlichen Prepreg-Einzellagen, insbesondere aus Prepreg-Einzellagen mit unterschiedlicher Faserausrichtung und unterschiedlicher Imprägnierung, ein mehrlagiger Prepreg-Materialzuschnitt gefügt werden kann.

Mit dem vorschlagsgemäßen Verfahren ist eine Auslegung von Prepreg-Materialzuschnitten möglich, die vollumfänglich auf den jeweiligen Anwendungsfall hin ausgerichtet ist. Insoweit ist die Integration dieses Verfahrens in eine Fertigungsanlage für die Herstellung faserverstärkter Kunststoffteile mit der Möglichkeit einer deutlichen Verbesserung der mechanischen Eigenschaften des faserverstärkten Kunststoffteils einerseits und mit einer Kostenreduzierung andererseits verbunden. Die Kostenreduzierung ergibt sich in erster Linie dadurch, dass auf eine aufwendige Lagerhaltung und eine aufwendige Handhabung weitgehend verzichtet werden kann.

Das vorschlagsgemäße Verfahren führt auch zu ganz besonderen Vorteilen im Hinblick auf die Wiederverwendbarkeit von Materialien. Dies liegt zunächst einmal daran, dass als Ausgangsmaterial ein Trocken-Fasermaterial genutzt werden kann, so dass der in der Zuschnittstation entstehende Verschnitt ohne Nachbehandlung der Herstellung neuen Fasermaterials zugeführt werden kann.

Ferner ist es ohne weiteres möglich, einen eventuellen Fehlauftrag von Matrixharz und Härter, insbesondere außerhalb des Randes des Faserzuschnitts, sortenrein zu entsorgen bzw. wiederzuverwenden, insbesondere wenn der Harzauftrag gemäß Anspruch 6 räumlich getrennt von dem Härterauftrag erfolgt.

Bei der weiter bevorzugten Ausgestaltung gemäß Anspruch 12 ist der Konfektionierstation eine Umformstation nachgeschaltet, in der der Prepreg-Materialzuschnitt mittels eines Umformwerkzeugs umgeformt ist. Sofern, wie gemäß Anspruch 13 vorgeschlagen, eine verkettete Fertigungsanlage vorgesehen ist, kann der vorschlagsgemäß hergestellte Prepreg-Materialzuschnitt direkt umgeformt werden, ohne dass eine aufwendige, kühlende Lagerung erforderlich ist.

Nach einer weiteren Lehre, gemäß Anspruch 14, der ebenfalls eigenständige Bedeutung zukommt, wird ein Verfahren zur Herstellung eines im Wesentlichen schalenförmigen faserverstärkten Kunststoffteils in einer zumindest teilweise automatisierten Fertigungsanlage beansprucht. Dabei wird ein Prepreg-Materialzuschnitt in einer Umformstation mit einem Umformwerkzeug, hier und vorzugsweise mit Obermatrize und Untermatrize, eingelegt und das Umformwerkzeug anschließend zum Umformen des Materialzuschnitts geschlossen. Wesentlich ist nach dieser weiteren Lehre, dass der Prepreg-Materialzuschnitt in dem vorschlagsgemäßen Verfahren hergestellt ist.

Das Verfahren nach der weiteren Lehre ist nichts anderes als die Integration des erstgenannten Verfahrens zur Herstellung eines Preform-Materialzuschnitts in die Fertigung eines im Wesentlichen schalenförmigen faserverstärkten Kunststoffteils.

Nach einer weiteren Lehre gemäß Anspruch 15, der ebenfalls eigenständige Bedeutung zukommt, wird eine Fertigungsanlage zur Durchführung eines der vorschlagsgemäßen Verfahren beansprucht. Wesentlich nach dieser weiteren Lehre ist die Tatsache, dass eine Zuschnittstation, eine der Zuschnittstation nachgeschaltete Imprägnierstation und eine der Imprägnierstation nachgeschaltete Konfektionierstation, jeweils im obigen Sinne, nachgeschaltet ist. Auf alle Ausführungen zu den vorschlagsgemäßen Verfahren, die geeignet sind, die Fertigungsanlage zu erläutern, darf verwiesen werden.

Im Folgenden wird die Erfindung anhand einer Zeichnung näher erläutert. In der Zeichnung zeigt
- Fig. 1: eine Fertigungsanlage zur Durchführung der vorschlagsgemäßen Verfahren in einer schematischen Draufsicht,
- Fig. 2: zwei vorschlagsgemäße Faserzuschnitte a) bei einer ersten Faserausrichtung und b) bei einer zweiten Faserausrichtung, jeweils in einer schematischen Draufsicht und
- Fig. 3: a) ein erster Abschnitt der Harzauftragsstation und b) ein zweiter Abschnitt der Harzauftragsstation, jeweils in einer schematischen Draufsicht.

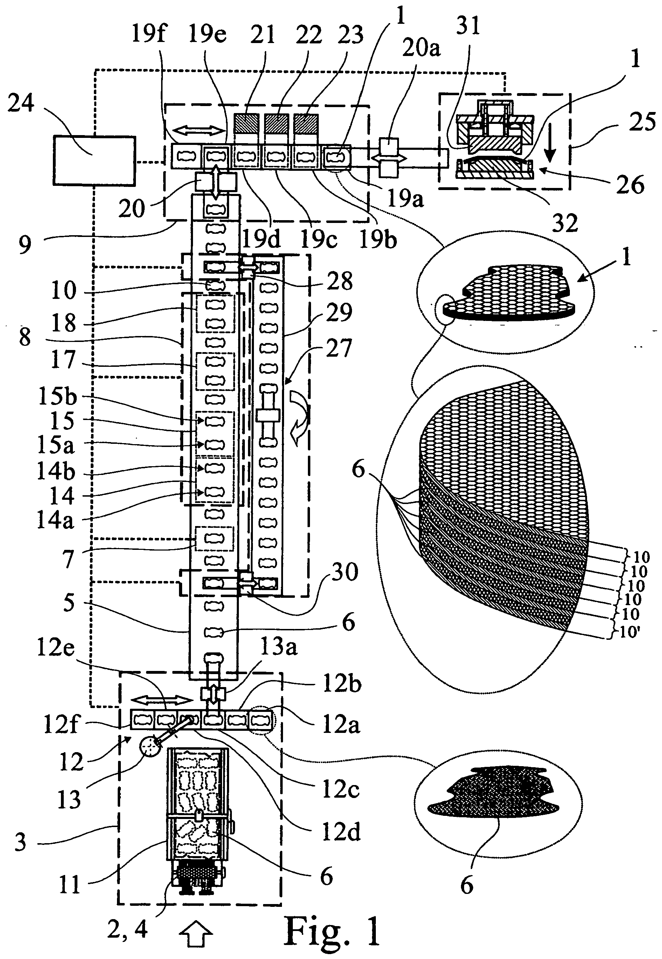

Die in Fig. 1 dargestellte Fertigungsanlage dient der Durchführung des vorschlagsgemäßen Verfahrens zur Herstellung eines flächigen Prepreg-Materialzuschnitts 1. Hier und vorzugsweise handelt es sich um eine vollautomatisierte Fertigungsanlage. Dies bedeutet, dass alle noch zu erläuternden Prozesse automatisch ablaufen und dass ein Werkstücktransport zwischen Prozessstationen im Sinne einer vollverketteten Fertigungsanlage ebenfalls automatisch ablaufen. Grundsätzlich ist es aber auch denkbar, dass die Fertigungsanlage nur teilweise automatisiert ist, so dass verschiedene Prozess- und/oder Transportschritte manuell ablaufen können.

Bei dem herzustellenden Prepreg-Materialzuschnitt 1 können unterschiedliche Prepreg-Materialien zur Anwendung kommen. Ganz allgemein werden solche Prepreg-Materialien aus Rovings, Textilien und/oder multiaxialen Strukturen erstellt und mit einem Matrixharz imprägniert. Bei den zu imprägnierenden Fasermaterialien 2 handelt es sich vorzugsweise um GFK-Materialien oder um CFK-Materialien. Bei dem Matrixharz kann es sich um ein lösungsmittelhaltiges oder wasserbasierendes Epoxidharz, um ein pulverförmiges Material, um ein Hotmelt, um ein Phenolsystem, um ein Polyester-/Vinylester-/ oder um ein Acrylharzsystem o. dgl. handeln. Diese Nennung möglicher Materialien ist nicht beschränkend zu verstehen.

Wesentlich ist zunächst, dass das Fasermaterial 2 an einer Zuschnittstation 3 auf die Geometrie des jeweils herzustellenden Prepreg-Materialzuschnitts 1 zugeschnitten wird. Bei dem dargestellten und insoweit bevorzugten Ausführungsbeispiel wird das Fasermaterial 2 der Zuschnittstation 3 kontinuierlich in Form einer Faserrolle 4 zugeführt. Denkbar ist aber auch, dass das Fasermaterial 2 in Form von Fasermatten o. dgl. der Zuschnittstation 3 zugeführt wird.

An die Zuschnittstation 3 schließt sich eine lineare Fördereinrichtung 5 an, die hier und vorzugsweise als Förderband ausgestaltet ist. Nach der Übergabe des Faserzuschnitts 6 an das Förderband 5 erreicht der Faserzuschnitt 6 eine Zentrierstation 7, die manuell oder sensorbasiert arbeiten kann. Hier und vorzugsweise handelt es sich um eine sensorbasierte Zentrierstation 7, die mittels einer Kamera die Ausrichtung des übergebenen Faserzuschnitts 6 ermittelt. Diese Ausrichtung ist für nachfolgende Prozessschritte von Bedeutung, wie noch erläutert wird.

Anschließend gelangt der Faserzuschnitt 6 in eine Imprägnierstation 8 und wird dort mit einem Matrixharz imprägniert. Das Imprägnieren umfasst hier und vorzugsweise den Auftrag eines Matrixharzes sowie den anschließenden Auftrag eines Härters. Dies wird weiter unten noch erläutert. Anschließend durchläuft der mit Matrixharz und Härter benetzte Faserzuschnitt 6 ebenfalls noch zu erläuternde Trocknungs- und Kühlprozesse und erreicht eine Konfektionierstation 9. In der Konfektionierstation 9 wird die resultierende Prepreg-Einzellage 10 mit mindestens einer weiteren Prepreg-Einzellage zu einem mehrlagigen Prepreg-Materialzuschnitt 1 gefügt. Der fertig hergestellte Prepreg-Materialzuschnitt 1 kann dann unmittelbar einer umformenden Bearbeitung zugeführt werden, wie noch erläutert wird.

Die Zuschnittstation 3 umfasst mindestens einen 2D-Cutter 11, dem vorzugsweise mindestens ein Zuschnittlager 12 nachgeschaltet ist. Zwischen dem 2D-Cutter 11 und dem Zuschnittlager 12 ist hier und vorzugsweise ein Handhabungsgerät 13 vorgesehen. Die Übergabe der Faserzuschnitte 6 von dem Zuschnittlager 12 auf das Förderband übernimmt die Übergabestation 13a. Es können auch verschiedene Zuschnittlager bestückt werden, die durch eine Verkettung der Anlage zugeführt werden ( Pufferstation ).

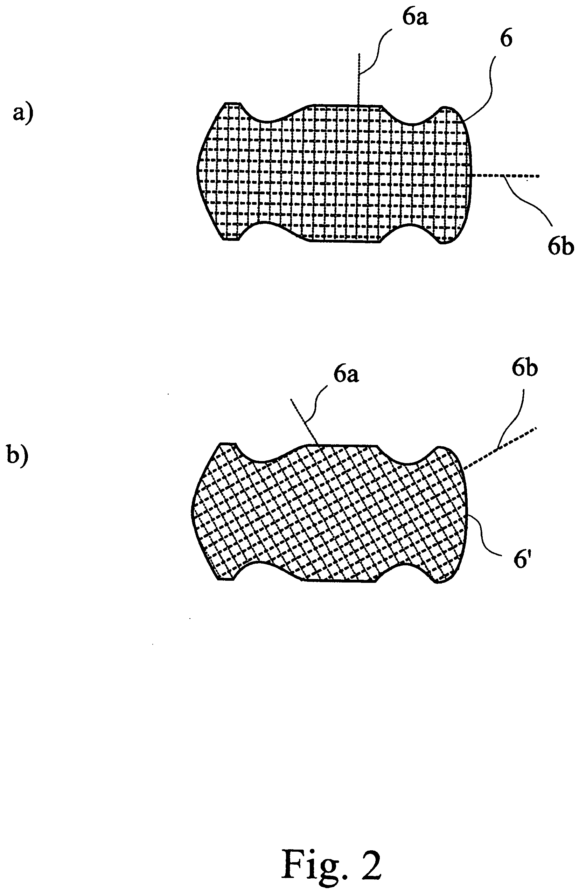

Fig. 1 zeigt, dass aus dem Fasermaterial 2 mehrere Faserzuschnitte 6 mit ganz unterschiedlicher Orientierung geschnitten worden sind. Dies führt dazu, dass die Faserorientierung innerhalb eines Faserzuschnitts 6 weitgehend beliebig gewählt werden kann. Fig. 2 zeigt in den Ansichten a) und b) zwei hinsichtlich der Umrisslinie identische, hinsichtlich der Faserausrichtung jedoch unterschiedliche Faserzuschnitte 6, 6'. Die Faserausrichtung ist in Fig. 2 innerhalb der Faserzuschnitte 6, 6' mit gestrichelten Linien angedeutet, wobei der Faserzuschnitt 6, 6' hier und vorzugsweise ein Gewebe ist, dessen Kettfäden mit dem Bezugszeichen 6a und dessen Schußfäden mit dem Bezugszeichen 6b angedeutet sind.

Das Zuschnittlager 12 ist vorzugsweise mit einer Anzahl von Lagerplätzen 12a-f ausgestattet, die mindestens der Anzahl der Lagen des herzustellenden Prepreg-Materialzuschnitts 1 entspricht. Bei dem dargestellten und insoweit bevorzugten Ausführungsbeispiel handelt es sich bei dem Prepreg-Materialzuschnitt 1 um einen 6-lagigen Materialzuschnitt, wie der oberen Detaildarstellung in Fig. 1 zu entnehmen ist.

Grundsätzlich ist es denkbar, dass jeder Faserzuschnitt 6 in irgendeiner Weise gekennzeichnet wird, so dass die "Art" des Faserzuschnitts in nachfolgenden Prozessschritten, insbesondere beim Imprägnieren, berücksichtigt werden kann. Denkbar ist aber auch, dass jeder Lagerplatz 12a-f gekennzeichnet ist, so dass bei der Übergabe an das Transportband 5 eine Information über den Entnahmeplatz mit "übergeben" werden kann. In diesem Fall muss in einem bestimmten Lagerplatz 12a-f stets die gleiche "Art" eines Faserzuschnitts 6 eingelegt werden. Die oben beschriebenen Kennzeichnungen können durch RFID-Chips, durch Barcodes o. dgl. umgesetzt werden. Andere Varianten sind denkbar.

Besondere Bedeutung kommt nun der Auslegung der Imprägnierstation 8 zu. Vorzugsweise ist es so, dass der Faserzuschnitt 6 in der Imprägnierstation 8 mit einem Matrixharz und mit einem Härter benetzt wird. Grundsätzlich ist es auch denkbar, dass in der Imprägnierstation 8 ausschließlich ein Matrixharz auf den Faserzuschnitt 6 aufgetragen wird.

Bei dem dargestellten und insoweit bevorzugten Ausführungsbeispiel ist der Harzauftrag in einer Harzauftragsstation 14 und der Härterauftrag in einer Härterauftragsstation 15 vorgesehen, wobei die Harzauftragsstation 14 räumlich getrennt von der Härterauftragsstation 15 angeordnet ist.

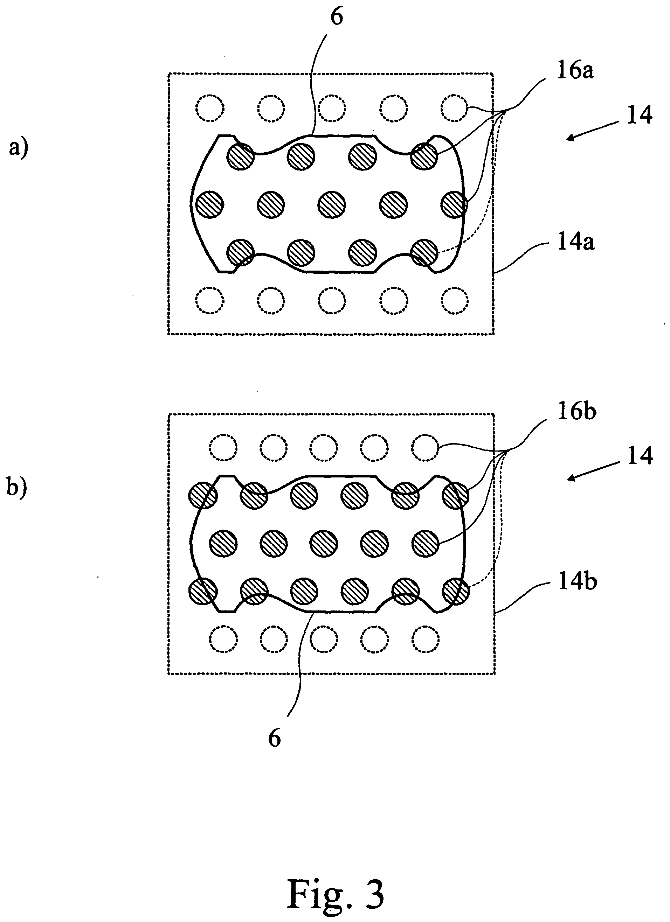

Der Harzauftrag erfolgt innerhalb der Harzauftragsstation 14 in zwei Stufen, nämlich in einer ersten Stufe 14a und in einer zweiten Stufe 14b. Die beiden Stufen sind in Fig. 3 ganz schematisch dargestellt. Die Zweistufigkeit erlaubt ein nahezu vollflächiges Auftragen von Matrixharz mit einer kontruktiv besonders einfach gestalteten Anordnung. Hier und vorzugsweise erfolgt das Auftragen des Matrixharzes nämlich durch einfache Auftragsdüsen 16a, 16b, die das flüssige Matrixharz auf den Faserzuschnitt 6 aufbringen. Dabei wird der Faserzuschnitt 6 gemäß Fig. 3a) zunächst unter eine Düsenanordnung mit den Auftragsdüsen 16a und anschließend gemäß Fig. 3b) unter eine Düsenanordnung mit den Auftragsdüsen 16b verstellt. Bezogen auf den jeweils unter der entsprechenden Düsenanordnung positionierten Faserzuschnitt 6 sind die Auftragsdüsen 16a, 16b versetzt zueinander angeordnet, so dass sich insgesamt eine fast flächige Beaufschlagung des Faserzuschnitts 6 mit Matrixharz ergibt.

Interessant bei der in Fig. 3 dargestellten und insoweit bevorzugten Ausführungsform ist die Tatsache, dass die Auftragsdüsen 16a, 16b bedarfsweise einzeln aktiviert bzw. deaktiviert werden können. Die deaktivierten Auftragsdüsen 16a, 16b sind in Fig. 3 jeweils in gestrichelter Linie dargestellt. Die Aktivierung bzw. Deaktivierung erfolgt in Abhängigkeit von der Geometrie des Faserzuschnitts 6 und der Lage des Faserzuschnitts 6 auf dem Förderband 5. Die entsprechende Ansteuerung der Auftragsdüsen 16a, 16b wird hier und vorzugsweise in Abhängigkeit von den Sensorsignalen aus der Zentrierstation 7 vorgenommen.

Dadurch, dass die Auftragsdüsen 16a, 16b bezogen auf die Oberfläche des Faserzuschnitts 6 matrixartig angeordnet sind, lässt sich in gewissen Grenzen ein flächenspezifischer Harzauftrag realisieren. Dieser flächenspezifische Harzauftrag kann in noch zu erläuternder Weise störungstechnisch vorgegeben sein.

Für den gezielten Harzauftrag sind zahlreiche vorteilhafte Varianten denkbar. Insbesondere kann es vorteilhaft sein, dass Matrixharz als Pulver vorzusehen und entsprechend im Wege der Pulverbeschichtung (Powder Scattering System) aufzutragen. Andere Varianten sind denkbar.

Der Härterauftrag in der Härterauftragsstation 15 kann grundsätzlich identisch zu dem beschriebenen Harzauftrag vorgesehen sein. Insbesondere ist es hier und vorzugsweise vorgesehen, dass auch der Härterauftrag in zwei Stufen gemäß Fig. 3 vorgenommen wird. Auf eine wiederholte Erläuterung dieses zweistufigen Auftrags wird an dieser Stelle verzichtet. Alle Ausführungen zu dem Harzauftrag gelten für den Härterauftrag entsprechend.

Von besonderer Bedeutung bei dem in Fig. 1 dargestellten Fertigungslayout ist die Tatsache, dass die Harzauftragsstation 14 wie erläutert räumlich getrennt von der Härterauftragsstation 15 angeordnet ist. Dies ist vor dem Hintergrund vorteilhaft, dass der Harzauftrag und hier auch der Härterauftrag flächig auf eine Auftragsfläche vorgenommen wird, die jedenfalls näherungsweise der Fläche des zu benetzenden Faserzuschnitts 6 entspricht. Fig. 3 zeigt, dass mit der recht groben Matrix von Auftragsdüsen 16a, 16b nicht vermieden werden kann, dass Matrixharz bzw. Härter außerhalb des Faserzuschnitts 6 aufgetragen wird. Dieser Fehlauftrag muss in irgendeiner Weise entsorgt oder wiederverwendet werden. Dies ist aufgrund der räumlichen Trennung von Harzauftrag und Härterauftrag in besonders einfacher Weise möglich. Eine sortenreine Entsorgung bzw. Wiederverwendung von Harz bzw. Härter ist so auf einfache Weise möglich.

Grundsätzlich ist es aber auch denkbar, dass der Harzauftrag und der Härterauftrag in einer einzigen Stufe zusammengefasst werden. Hierfür sind bereits sogenannte Mischköpfe bekannt geworden, die Matrixharz und Härter gleichzeitig auf einen Faserzuschnitt 6 aufbringen können.

Bei dem dargestellten und insoweit bevorzugten Ausführungsbeispiel wird der mit Matrixharz und Härter benetzte Faserzuschnitt 6 in einer Trocknungsstation 17 getrocknet. Die Trocknung erfolgt insbesondere unter Wärmeinfluss, um das Harz-/Härtergemisch mit dem Fasermaterial 2 zu vernetzen. Anschließend durchläuft der getrocknete Faserzuschnitt 6 eine Kühlstation 18, um einer Aktivierung von Matrixharz und Härter nach dem Vernetzen gezielt entgegenwirken zu können.

Interessant ist nun der vorschlagsgemäße Aufbau der Konfektionierstation 9. Die Konfektionierstation 9 ist mit insgesamt sechs Konfektionierplätzen 19a-f ausgestattet, auf denen jeweils eine Anzahl von Prepreg-Einzellagen 10 abgelegt werden kann. Hierfür ist eine Übergabestation 20 vorgesehen, die zwischen dem Förderband 5 und den Konfektionierplätzen 19a-f angeordnet ist.

Der Konfektionierstation 9 ist auch eine Fixierstufe 21 zugeordnet, die eine Fixierung der in dem jeweiligen Konfektionierplatz 19a-f angeordneten Prepreg-Einzellagen 10 vornimmt. Die Fixierung lässt sich auf unterschiedliche Weise realisieren. Hier und vorzugsweise erfolgt die Fixierung durch den Eingriff beheizter Stifte mit den in dem jeweiligen Konfektionierplatz 19a-f angeordneten Prepreg-Einzellagen 10. Sofern in den jeweiligen Prepreg-Einzellagen 10 ein Thermoplast-Binderanteil enthalten ist, kann dieser für die Fixierung entsprechend aktiviert werden.

Die Konfektionierstation 9 umfasst ferner eine Einleger-Zuführstation 22, in der Einleger wie Verstärkungselemente o. dgl. auf oder zwischen die Prepreg-Einzellagen 10 appliziert werden können. Hier und vorzugsweise ist die Konfektionierungsstation 9 schließlich mit einer Kennzeichnungsstation 23 ausgestattet, bei der beispielsweise ein RFID-Chip oder ein Barcode auf die Prepreg-Einzellagen 10, vorzugsweise auf die oberste Prepreg-Einzellage 10 aufgebracht wird.

Mit dem vorschlagsgemäßen Verfahren lässt sich ein Prepreg-Materialzuschnitt 1 herstellen, der gezielt auf einen bestimmten Anwendungsfall hin parametriert ist. Dabei lassen sich jeweils lagenweise die Faserausrichtung, der Harzauftrag und der Härterauftrag individuell einstellen.

Um die Möglichkeiten hinsichtlich der Optimierung des Prepreg-Materialzuschnitts 1 voll ausschöpfen zu können ist vorzugsweise eine Fertigungssteuerung 24 vorgesehen, die in Fig. 1 nur schematisch dargestellt ist. In der Fertigungssteuerung 24 werden in einem Produkt-Datenmodell vorzugsweise Materialparameter des herzustellenden Prepreg-Materialzuschnitts 1 wie die Zuschnittgeometrie, die Lagenanzahl, der Matrixharz- und Härterauftrag in den einzelnen Lagen, die Faserausrichtung in den einzelnen Lagen o. dgl. gespeichert. Die Fertigungssteuerung 24 ist steuerungstechnisch mit der Zuschnittstation 3, mit der Zentrierstation 7, mit der Imprägnierstation 8 und der Konfektionierstation 9 gekoppelt. So kann der Zuschnitt in der Zuschnittstation 3 und/oder das Imprägnieren in der Imprägnierstation 8 und/oder das Konfektionieren in der Konfektionierstation 9 in Abhängigkeit von dem in der Fertigungssteuerung 24 abgelegten Produkt-Datenmodell vorgenommen werden.

In ganz besonders bevorzugter Ausgestaltung ist der Konfektionierstation 9 über die Übergabestation 20a eine Umformstation 25 nachgeschaltet, in der der Prepreg-Materialzuschnitt 1 mittels eines Umformwerkzeugs 26 in an sich bekannter Weise umgeformt wird. Das besondere an dem Nachschalten der Umformstation 25 ist die Tatsache, dass erstmals die Herstellung eines Prepreg-Materialzuschnitts 1 in eine Fertigungsanlage zur Herstellung eines faserverstärkten Kunststoffteils integriert wird.

In besonders bevorzugter Ausgestaltung sind nun die Zuschnittstation 3, die Imprägnierstation 8, die Konfektionierstation 9, eine gegebenenfalls vorhandene Umformstation 25 und gegebenenfalls vorhandene, weitere vor-, nach- oder zwischengelagerte Stationen nach Art einer automatisierten Fertigungsanlage verkettet. Dies bedeutet, dass die entsprechenden Stationen mit irgendwie gearteten Handhabungsgeräten fördertechnisch gekoppelt sind. Alternativ oder zusätzlich kann es vorteilhaft sein, dass der Zuschnitt in der Zuschnittstation 3, das Imprägnieren in der Imprägnierstation 8, das Konfektionieren in der Konfektionierstation 9 und das Umformen in der gegebenenfalls vorhandenen Umformstation 25 automatisiert ablaufen.

Auf eine Besonderheit der dargestellten Fertigungsanlage darf noch gesondert eingegangen werden. Die Fertigungsanlage erlaubt nämlich einen beidseitigen Matrix- bzw. Harzaufrag auf den Faserzuschnitt 6. Hierfür ist eine Wendestation 27 vorgesehen, die parallel zu dem Transportband 5 vorgesehen ist. Sofern ein bereits einseitig imprägnierter Faserzuschnitt 6 auf seiner zweiten Seite imprägniert werden soll, ist ein Auskoppeln aus dem Förderband 5 durch die der Imprägnierstation 8 nachgeschaltete Übergabestation 28 möglich, wodurch der Faserzuschnitt 6 durch ein weiteres Förderband 29 zu der Wendestation 27 gelangt. Nach dem Wenden in der Wendestation 27 lässt sich der so gewendete Faserzuschnitt 6 durch die Übergabestation 30 in das Transportband 5 einkoppeln und zwar vor der Imprägnierstation 8 und hier und vorzugsweise auch vor der Zentrierstation 7, so dass ein Imprägnieren der zweiten Seite des Faserzuschnitts 6 möglich ist.

Bei dem in der oberen Detaildarstellung gemäß Fig. 1 gezeigten, fertig hergestellten Prepreg-Materialzuschnitt 1 kommt der Wendestation 27 für die unterste Lage 10' ganz besondere Bedeutung zu. Die unterste Prepreg-Einzellage 10' ist nämlich unter Benutzung der Wendestation 27 beidseitig mit Matrixharz und Härter beaufschlagt worden, während alle darüberliegenden Prepreg-Einzellagen 10 jeweils nur einseitig mit Matrixharz und Härter beaufschlagt worden sind. Bei entsprechender Konfektionierung läßt sich damit erreichen, dass zwischen zwei Lagen von Fasermaterial (in der oberen Detaildarstellung gemäß Fig. 1 jeweils kreuzschraffiert) stets eine Schicht aus Matrixharz und Härter (in der oberen Detaildarstellung gemäß Fig. 1 schrägschraffiert) liegt.

Nach einer weiteren Lehre, der eigenständige Bedeutung zukommt, wird ein Verfahren zur Herstellung eines im Wesentlichen schalenförmigen faserverstärkten Kunststoffteils in einer zumindest teilweise automatisierten Fertigungsanlage beansprucht, wobei ein Prepreg-Materialzuschnitt 1 in einer oben beschriebenen Umformstation 25 mit einem Umformwerkzeug 26, hier und vorzugsweise mit Obermatrize 31 und Untermatrize 32, eingelegt wird, wobei das Umformwerkzeug 26 anschließend zum Umformen des Prepreg-Materialzuschnitts 1 geschlossen wird.

Das weitere vorschlagsgemäße Verfahren betrifft also die schon angesprochene Integration des vorschlagsgemäßen, erst zuvor beschriebenen Verfahrens in die Fertigung eines faserverstärkten Kunststoffteils. Auf alle Ausführungen, die geeignet sind, den Betrieb der in Fig. 1 gezeigten Gesamtanlage zu erläutern, darf verwiesen werden.

Schließlich wird nach einer weiteren Lehre, der ebenfalls eigenständige Bedeutung zukommt, eine Fertigungsanlage zur Durchführung der vorschlagsgemäßen Verfahren beansprucht, wobei die vorschlagsgemäße Verfahren eine obige Zuschnittstation 3, eine obige Imprägnierstation 8 und eine obige Konfektionierstation 9 aufweist. Auch diesbezüglich darf auf alle die in Fig. 1 gezeigte Gesamtanlage betreffenden Ausführungen verwiesen werden.

## Patentansprüche

1. Verfahren zur Herstellung eines flächigen Prepreg-Materialzuschnitts (1) in einer zumindest teilweise automatisierten Fertigungsanlage, bei dem ein Fasermaterial (2) mit mindestens einem Matrixharz imprägniert wird,
**dadurch gekennzeichnet,**
**dass** das Fasermaterial (2) in einer Zuschnittstation (3) auf die Geometrie des jeweils herzustellenden Prepreg-Materialzuschnitts (1) zugeschnitten wird, dass nachfolgend der resultierende Faserzuschnitt (6) in einer Imprägnierstation (8) imprägniert wird und weiter nachfolgend die resultierende Prepreg-Einzellage (10) in einer Konfektionierstation (9) mit mindestens einer weiteren, zuvor in der Imprägnierstation (8) imprägnierten Prepreg-Einzellage zu einem mehrlagigen Prepreg-Materialzuschnitt gefügt wird.

2. Verfahren nach Anspruch 1, **dadurch gekennzeichnet, dass** das Fasermaterial (2) der Fertigungsanlage kontinuierlich, insbesondere als Rollenware, zugeführt wird.

3. Verfahren nach Anspruch 1 oder 2, **dadurch gekennzeichnet, dass** das Fasermaterial (2) in der Zuschnittstation (3) entsprechend der Geometrie des herzustellenden Prepreg-Materialzuschnitts (1) in Abhängigkeit von der Faserausrichtung des Fasermaterials (2) zugeschnitten wird.

4. Verfahren nach einem der vorhergehenden Ansprüche, **dadurch gekennzeichnet, dass** der Faserzuschnitt (6) in mindestens einem Zuschnittlager (12) zwischengelagert wird, vorzugsweise, dass das Zuschnittlager (12) eine Anzahl von Lagerplätzen (12a-f) aufweist, die mindestens der Anzahl der Lagen des herzustellenden Prepreg-Materialzuschnitts (1) entspricht.

5. Verfahren nach einem der vorhergehenden Ansprüche, **dadurch gekennzeichnet, dass** der Faserzuschnitt (6) in der Imprägnierstation (8) mit einem Matrixharz und ggf. mit einem Härter benetzt wird.

6. Verfahren nach Anspruch 5, **dadurch gekennzeichnet, dass** in der Imprägnierstation (8) der Harzauftrag in einer Harzauftragsstation (14) räumlich getrennt von dem Härterauftrag in einer Härterauftragsstation (15) erfolgt, vorzugsweise, dass der Härterauftrag nach dem Harzauftrag erfolgt.

7. Verfahren nach Anspruch 5 oder 6, **dadurch gekennzeichnet, dass** der Harzauftrag und/oder der Härterauftrag flächig auf eine Auftragsfläche vorgenommen wird, die jedenfalls näherungsweise der Fläche des zu benetzenden Faserzuschnitts (6) entspricht.

8. Verfahren nach Anspruch 5 und ggf. nach Anspruch 6 oder 7, **dadurch gekennzeichnet, dass** der benetzte Faserzuschnitt (6) in einer Trocknungsstation (17) getrocknet wird, und/oder, dass der getrocknete Faserzuschnitt (6) in einer Kühlstation (18) gekühlt wird.

9. Verfahren nach einem der vorhergehenden Ansprüche, **dadurch gekennzeichnet, dass** in der Konfektionierstation (9) Einleger o. dgl. auf oder zwischen die Prepreg-Einzellagen (10) appliziert werden, und/oder, dass der resultierende, mehrlagige Prepreg-Materialzuschnitt in der Konfektionierstation (9) gekennzeichnet wird.

10. Verfahren nach einem der vorhergehenden Ansprüche, **dadurch gekennzeichnet, dass** eine Fertigungssteuerung (24) vorgesehen ist, in der Materialparameter des herzustellenden Prepreg-Materialzuschnitts (1) wie die Zuschnittgeometrie, die Lagenanzahl, der Matrixharz- und Härterauftrag in den einzelnen Lagen, die Faserausrichtung in den einzelnen Lagen, o.dgl. in einem Produkt-Datenmodell abgelegt werden.

11. Verfahren nach einem der vorhergehenden Ansprüche, **dadurch gekennzeichnet, dass** der Zuschnitt in der Zuschnittstation (3) und/oder das Imprägnieren in der Imprägnierstation (8) und/oder das Konfektionieren in der Konfektionierstation (9) in Abhängigkeit von dem Produkt-Datenmodell vorgenommen werden.

12. Verfahren nach einem der vorhergehenden Ansprüche, **dadurch gekennzeichnet, dass** der Konfektionierstation (9) eine Umformstation (25) nachgeschaltet ist, in der der Prepreg-Materialzuschnitt (1) mittels eines Umformwerkzeugs (26) umgeformt wird.

13. Verfahren nach einem der vorhergehenden Ansprüche, **dadurch gekennzeichnet, dass** die Zuschnittstation (3), die Imprägnierstation (8), die Konfektionierstation (9) und eine ggf. vorhandene Umformstation (25) und ggf. vorhandene, weitere vor-, nach- oder zwischengelagerte Stationen nach Art einer automatisierten Fertigungsanlage verkettet sind, und/oder, dass der Zuschnitt in der Zuschnittstation (3), das Imprägnieren in der Imprägnierstation (8), das Konfektionieren in der Konfektionierstation (9) und das Umformen in der ggf. vorhandenen Umformstation (25) automatisiert ablaufen.

14. Verfahren zur Herstellung eines im Wesentlichen schalenförmigen faserverstärkten Kunststoffteils in einer zumindest teilweise automatisierten Fertigungsanlage, wobei ein Prepreg-Materialzuschnitt (1) in einer Umformstation (25) mit einem Umformwerkzeug (26), insbesondere mit Obermatrize (31) und Untermatrize (32), eingelegt wird und das Umformwerkzeug (26) anschließend zum Umformen des Prepreg-Materialzuschnitts (1) geschlossen wird,
**dadurch gekennzeichnet,**
**dass** der Prepreg-Materialzuschnitt (1) in einem Verfahren nach einem der vorhergehenden Ansprüche hergestellt ist.

15. Fertigungsanlage zur Durchführung eines Verfahrens nach einem der vorhergehenden Ansprüche, wobei eine Zuschnittstation (3) für den Zuschnitt des Fasermaterials (2) auf die Geometrie des jeweils herzustellenden Prepreg-Materialzuschnitts (1), eine nachgeschaltete Imprägnierstation (8) für das Imprägnieren des resultierenden Faserzuschnitts (6), und eine weiter nachgeschaltete Konfektionierstation (9) für das Fügen der resultierenden Prepreg-Einzellage (10) mit mindestens einer weiteren, zuvor in der Imprägnierstation (8) imprägnierten Prepreg-Einzellage zu einem mehrlagigen Prepreg-Materialzuschnitt vorgesehen sind.

## Claims

1. A method for producing a flat prepreg material blank (1) in an at least partially automated production system, in which a fibrous material (2) is impregnated with at least one matrix resin,
**characterized in that**
- the fibrous material (2) is cutted in a blanking station (3) to the geometry of a particular prepreg material blank (1) to be produced;
- the resultant fibrous blank (6) is impregnated in an impregnation station (8); and
- the resultant single prepreg layer (10) is joined in an assembly station (9) with at least one further single prepreg layer that was previously impregnated in the impregnation station (8), to form a multiple-layer prepreg material blank.

2. The method according to claim 1, **characterized in that** the fibrous material (2) is fed continuously to the production system as rolls.

3. The method according to claim 1 or 2, **characterized in that** the step of cutting includes cutting the fibrous material (2) in the blanking station (3) according to a geometry of the prepreg material blank (1) to be produced depending on a fiber orientation of the fibrous material (2).

4. The method according to one of the preceding claims, **characterized in that** the fibrous blank (6) is stored in at least one blank storage area (12), preferably the at least one blank storage area (12) has a number of storage places (12a-f) that correspond at least to the number of layers of the prepreg material blank (1) to be produced.

5. The method according to one of the preceding claims, **characterized in that** the fibrous blank (6) is wetted in the impregnation station (8) with a matrix resin, and is also wetted with a curing agent, if applicable.

6. The method according to claim 5, **characterized in that** in the impregnation station (8), the resin application in a resin-application station (14) occurs spatially separated from the curing-agent application in a curing-agent application station (15), preferably, the curing agent is applied after resin is applied.

7. The method according to claim 5 or 6, **characterized in that** the resin and/or the cutting agent are applied flat onto the application surface, which approximately corresponds to the surface of the fibrous blank (6) to be wetted.

8. The method according to claim 5, and claim 6 or 7, if applicable, **characterized in that** the wetted fibrous blank (6) is one of: dried in a drying station (17), cooled in a cooling station (18) and both.

9. The method according to one of the preceding claims, **characterized in that** in the assembly station (9) inserts or the like are applied onto or between the individual prepreg layers (10) and / or the resultant, multiple-layer prepreg material blank is marked in the assembly station (9).

10. The method according to one of the preceding claims, **characterized in that** a production control (24) is provided in which the material parameters of the prepreg material blank (1) to be produced are stored in a product data model, wherein the material parameters include the blank geometry, the number of layers, the matrix resin and curing-agent application in the individual layers and the fiber orientation in the individual layers or the like.

11. The method according to one of the preceding claims, **characterized in that** cutting is carried out in the blanking station (3) and / or impregnation is carried out in the impregnation station (8) and / or assembly is carried out in the assembly station (9) depending on the product data model.

12. The method according to one of the preceding claims, **characterized in that** a shaping station (25) is installed downstream of the assembly station (9) in which the prepreg material blank (1) is formed by way of a shaping tool (26).

13. The method according to one of the preceding claims, **characterized in that** the blanking station (3), the impregnation station (8), the assembly station (9) and a shaping station (25), if applicable, and optionally provided stations installed upstream, downstream, or in-between are linked to form an automated production system; and / or that cutting in the blanking station (3), impregnation in the impregnation station (8), assembly in the assembly station (9) and forming in the optionally provided shaping station (25) take place in an automated manner.

14. A method for producing an essentially bowl-formed fiber-reinforced plastic component in an at least partially automated production system, wherein a prepreg material blank (1) is arranged in a shaping station (25) comprising a shaping tool (26), in particular an upper matrix (31) and a lower matrix (32), and the shaping tool (26) is then closed for forming the prepreg material blank (1),
**characterized in that**
the prepreg material blank (1) is formed by a method according to one of the preceding claims.

15. A production system for carrying out a method according to one of the preceding claims comprising
- a blanking station (3) for cutting the fibrous material (2) to a geometry of the particular prepreg material blank (1) to be produced;
- a downstream impregnation station (8) for impregnating the resultant fibrous blank (6); and
- a further downstream assembly station (9) for joining the resultant single prepreg layer (10) with at least one further single prepreg layer, which further single prepreg layer was previously impregnated in the impregnation station (8) to form a multiple-layer prepreg material blank.

## Revendications

1. Procédé de fabrication d'une découpe plane de matériau préimprégné (1) dans au moins une installation de fabrication partiellement automatisée, pour lequel un matériau de fibres (2) est imprégné avec au moins une résine matricielle, **caractérisé en ce que** le matériau de fibres (2) est découpé dans un poste de découpe (3) à la géométrie de la découpe de matériau préimprégné (1) respectivement à fabriquer, **en ce qu'**ensuite la découpe de fibres (6) résultante est imprégnée dans un poste d'imprégnation (8) et ensuite la monocouche préimprégnée (10) résultante est en plus ajoutée à une découpe de matériau préimprégné multicouche dans un poste de préparation (9) avec au moins une autre monocouche préimprégnée imprégnée préalablement dans le poste d'imprégnation (8).

2. Procédé selon la revendication 1, **caractérisé en ce que** le matériau de fibres (2) est acheminé à l'installation de fabrication en continu, notamment en tant que rouleaux.

3. Procédé selon la revendication 1 ou 2, **caractérisé en ce que** le matériau de fibres (2) est découpé dans le poste de découpe (3) conformément à la géométrie de la découpe de matériau préimprégné (1) à fabriquer en fonction de l'orientation des fibres du matériau de fibres (2).

4. Procédé selon l'une quelconque des revendications précédentes, **caractérisé en ce que** la découpe de fibres (6) est entreposé dans au moins un stockage de découpes (12), de préférence, **en ce que** le stockage de découpe (12) comporte un nombre de places de stockage (12a-f), qui correspond au moins au nombre de couches de la découpe de matériau préimprégné (1) à fabriquer.

5. Procédé selon l'une quelconque des revendications précédentes, **caractérisé en ce que** la découpe de fibres (6) est mouillée dans le poste d'imprégnation (8) avec une résine matricielle et le cas échéant avec un durcisseur.

6. Procédé selon la revendication 5, **caractérisé en ce que** dans le poste d'imprégnation (8), l'application de la résine dans un poste d'application de résine (14) a lieu séparément dans l'espace de l'application du durcisseur dans un poste d'application de durcisseur (15), de préférence, **en ce que** l'application du durcisseur a lieu après l'application de la résine.

7. Procédé selon la revendication 5 ou 6, **caractérisé en ce que** l'application de la résine et/ou l'application du durcisseur est exécutée à plat sur une surface d'application, qui correspond à chaque fois approximativement à la surface de la découpe de fibres (6) à mouiller.

8. Procédé selon la revendication 5 et le cas échéant selon la revendication 6 ou 7, **caractérisé en ce que** la découpe de fibres (6) mouillée est séchée dans un poste de séchage (17) et/ou **en ce que** la découpe de fibres (6) séchée est refroidie dans un poste de refroidissement (18).

9. Procédé selon l'une quelconque des revendications précédentes, **caractérisé en ce que** dans le poste de préparation (9) des encarts ou éléments analogues sont appliqués sur ou entre les monocouches préimprégnées (10) et/ou **en ce que** la découpe de matériau préimprégné multicouche résultante est **caractérisée** dans le poste de préparation (9).

10. Procédé selon l'une quelconque des revendications précédentes, **caractérisé en ce qu'**une commande de fabrication (24) est prévue, dans laquelle sont mémorisés dans un modèle de données de produit les paramètres de matériau de la découpe de matériau préimprégné (1) à fabriquer comme la géométrie de découpe, le nombre de couches, l'application de résine matricielle et de durcisseur dans les couches individuelles, l'orientation des fibres dans les couches individuelles ou des paramètres analogues.

11. Procédé selon l'une quelconque des revendications précédentes, **caractérisé en ce que** la découpe est exécutée dans le poste de découpe (3) et/ou l'imprégnation dans le poste d'imprégnation (8) et/ou la préparation dans le poste de préparation (9) en fonction du modèle de données de produit.

12. Procédé selon l'une quelconque des revendications précédentes, **caractérisé en ce qu'**un poste de formage (25) est connecté en aval du poste de préparation (9), dans lequel la découpe de matériau préimprégné (1) est formée au moyen d'un outil de formage (26).

13. Procédé selon l'une quelconque des revendications précédentes, **caractérisé en ce que** le poste de découpe (3), le poste d'imprégnation (8), le poste de préparation (9) et un poste de formage (25) existant le cas échéant et d'autres postes placés en amont, en aval ou intercalés existant le cas échéant sont enchaînés selon le type d'une installation de fabrication automatisée, et/ou, **en ce que** la découpe dans le poste de découpe (3), l'imprégnation dans le poste d'imprégnation (8) la préparation dans le poste de préparation (9) et le formage dans le poste de formage (25) existant le cas échéant se déroulent de façon automatisée.

14. Procédé pour la fabrication d'une pièce en matière plastique pour l'essentiel renforcée aux fibres, en forme de coque dans une installation de fabrication au moins partiellement automatisée, une découpe de matériau préimpregné (1) étant introduite dans un poste de formage (25) avec un outil de formage (26), notamment avec une matrice supérieure (31) et une matrice inférieure (32) et l'outil de formage (26) étant fermé ensuite pour former la découpe de matériau préimprégné (1), **caractérisé en ce que** la découpe de matériau préimprégné (1) est fabriquée dans un procédé selon l'une quelconque des revendications précédentes.

15. Installation de fabrication pour exécuter un procédé selon l'une quelconque des revendications précédentes, prévoyant un poste de découpe (3) pour la découpe du matériau de fibres (2) à la géométrie de la découpe de matériau préimprégné (1) respectivement à fabriquer, un poste d'imprégnation (8) connecté en aval pour l'imprégnation de la découpe de fibres (6) résultante et un poste de préparation (9) connecté en plus en aval pour l'assemblage de la monocouche préimprégnée (10) résultante avec au moins une autre monocouche préimprégnée préalablement imprégnée dans le poste d'imprégnation (8) à une découpe de matériau préimprégnée multicouche.
